# EUROPEAN PATENT SPECIFICATION

(11) **EP 3 678 493 B1**
(45) Date of publication and mention of the grant of the patent: **15.01.2025**
(21) Application number: 18759653.1
(22) Date of filing: 04.09.2018
(51) Int. Cl.: A23F 5/40, A23C 11/04, A23C 11/02, A23L 9/20, A23J 3/08

(54) **NEW FOAMING COMPOSITION**
NEUE SCHÄUMENDE ZUSAMMENSETZUNG
NOUVELLE COMPOSITION MOUSSANTE

(30) Priority: 06.09.2017 EP 17189695
(43) Date of publication of application: 15.07.2020
(73) Proprietor: FrieslandCampina Nederland B.V., 3818 LE Amersfoort (NL)
(72) Inventor: ASRI, Lydia, 6700 AE Wageningen (NL); SULISTYONO, Ari, 6700 AE Wageningen (NL)
(74) Representative: FrieslandCampina IP Department
(86) International application number: PCT/EP2018/073720
(87) International publication number: WO 2019/048422

(56) References cited:
- WO-A1-2010/005297
- WO-A1-2017/134253
- WO-A1-98/07329
- WO-A2-2010/071425
- AU-A1- 2014 200 414
- US-A- 5 462 759
- US-A- 6 129 943
- US-A1- 2001 041 211
- JOSEPHINE A. HUNT ET AL: "Heat Stability of Oil-in-Water Emulsions Containing Milk Proteins: Effect of Ionic Strength and pH", JOURNAL OF FOOD SCIENCE, vol. 60, no. 5, 1 September 1995 (1995-09-01), pages 1120 - 1123, XP055172941, ISSN: 0022-1147, DOI: 10.1111/j.1365-2621.1995.tb06306.x

## Description

The present invention relates to a foaming composition for use in beverage such as coffee drinks of the cappuccino type.

### BACKGROUND

It is well known to use powders that upon dissolution produce foaming beverages. In many cases such compositions comprise, additional to the actual foaming composition a soluble beverage powder, such as a coffee, soup or chocolate powder, or extract, such as coffee or tea extracts. These are then used to prepare instant drinks, such as a cappuccino beverage, by adding (hot) water.

Because of the high demand in these kind of powder composition there is a need to prepare a more sustainable and affordable composition. One of the elements in the known compositions which is relatively expensive and has a relatively high burden on the ecosystem is protein. Hence, compositions using a sustainable, cheap source of protein and minimalizing the amount of protein are goals of the present invention.

Foaming compositions with a relatively low amount of protein are already known. One of such compositions has been described in WO 2010/005297, but this composition still contains a high amount of less sustainable casein protein.

Another such composition was described in US 6,129,943. However, the method for making this composition is very complex and expensive.

Thus, there is still a need for a foaming composition with better characteristics and improved methods for producing these.

WO 2017/134253 relates to a creamer composition containing casein or a salt thereof and an oil, wherein the weight ratio of casein or salt thereof to oil is about 0.005 : 1 to about 0.035 : 1, and its use together with a process of preparing a creamer composition. WO 98/07329 discloses a cold water-soluble powdered creamer which is made of agglomerated creamer particles. The creamer particles are each made up of a sweetener, a water-dispersible or water-soluble protein and a edible oil having a bland flavor and melting point to below 10°C.

WO 2010/071425 pertains to powdered foamer composition or ingredient suitable for producing enhanced foam in foodstuffs and beverages, the composition or ingredient comprising fat, carbohydrate, and protein and entrapped gas, and 0.1 - 3 wt. % of lecithin and/or at least one other phospholipid.

US 5462759 relates to powder-form foaming creamer for beverages, containing fat, carbohydrates and chicken-egg albumen protein.

US 2001/0041211 describes a powdered creamer soluble in cold water, which creamer is made up of powdered or agglomerated creamer particles. The creamer particles are preferably made up of a sweetener, a water-dispersible or water soluble protein and an edible oil having a melting point below 20°C.

Josephine A. Hunt et al : " Heat stability of oil-in-water emulsions containing milk proteins: effect of ionic strength and pH" in JOURNAL OF FOOD SCIENCE, vol. 60, no. 5, 1 September 1995, pages 1120 - 1123 describes experiments using caseinate or whey protein isolate in oil emulsions and the effect of heat treatment, ionic strength and pH on the emulsion properties. Heat-induced gelation is observed.

AU 2014 200 414 describes an aqueous foam comprising water, at least one polysaccharide and food-grade, interfacially active particles.

### SUMMARY OF THE INVENTION

It has been surprisingly found that addition of an emulsifier greatly enhances the foam texture and the stability of the foam when low amounts of proteins, which proteins are mainly whey proteins, are used. Surprisingly, the foam still maintains an attractive, milky taste. Therefore, the invention comprises a powdered foaming composition for beverages comprising fat, carbohydrates, protein, and an emulsifier, wherein the protein content is 6% or lower, based on the dry weight of the composition.

The invention is set out in the appended set of claims.

### DETAILED DESCRIPTION

The invention relates to a powdered foaming composition for beverages comprising fat, carbohydrates and protein, wherein the protein content is 6% or less on a dry weight basis (6 wt.%), further comprising an emulsifier. Preferably, the amount of protein is less than 5%, more preferably between 1 and 5%, more preferably between 3 and 5%, even more preferably between 3.5 and 4.5%..

The protein fraction comprises whey protein and casein, but the whey protein is a more important constituent of the composition and will be available in the composition in a higher amount than casein. Accordingly, the whey protein to casein ratio preferably is in the range is 50:1 to 1.1-1, more preferably in the range of 25:1 to 2:1. Other proteins from plant or animal origin, such as soy protein or egg protein may be present, but preferably in low amounts.

The absolute amount of whey protein ranges from 2 - 4.9 wt%, where the amount of casein lies in between 0.1 - 2.5 wt.%. The casein protein content preferably is derived from skim milk powder, while the whey protein preferably is mainly derived from whey powder and the remainder of the whey protein is derived from skimmed milk powder. In a preferred embodiment the amount of skimmed milk powder that is part of the composition is 2-5% (where the skimmed milk powder has a protein content of about 40% - 50%, where the casein amount is normally between 32 and 35% and the whey protein content is between 11 and 14%. Preferably more than 60 wt.% of the whey protein content of the foaming composition is derived from whey powder, more preferably more than 70 wt. %, even more preferably more than 75 wt. % and most preferably more than 80 wt. %. Alternatively, less than 30 wt. %, preferably less than 25 wt. % and even more preferable less than 20 wt. % of the whey protein is derived from skimmed milk powder.

In the prior art foaming compositions the casein protein is held responsible for the foaming properties of the powder composition. However, with a lowering of the casein content, the influence of casein on the stabilization of the foam properties of the composition decreases and the advantageous effects of the casein should be taken over by other ingredients. Surprisingly, it was found that addition of small amounts of emulsifier in combination with the low protein content yielded foaming compositions of which the foaming properties were comparable to, if not better than those of the foaming compositions of the prior art Further, it was surprisingly found that such a composition maintained the sensory characteristics (taste, mouthfeel and the like) of the prior art compositions.

The emulsifiers are chosen from the group of sodium stearoyl lactylate (SSL, E481), diacetyl tartaric ester of mono- and diglycerides (DATEM, E472e) and sucrose esters of fatty acids (E473). The amounts of these emulsifiers need not be large and generally will not exceed 1 wt.% and preferably will be present in an amount of 0.01 wt.% - 0.35 wt.%. If SSL is used the amount preferably is between 0.15 wt.% and 0.25 wt.%, more preferably between 0.16 and 0.24 wt.%, even more preferably between 0.17 and 0.23 wt.%, even more preferably between 0.18 and 0.22 wt.%, even more preferably between 0.19 and 0.21 wt.%, even more preferably around 0.2 wt.% , where DATEM is used, the amount preferably is between 0.05 wt.% and 0.15 wt.%, preferably between 0.06 and 0.14 wt.%, even more preferably between 0.07 and 0.13 wt.%, even more preferably between 0.08 and 0.12 wt.%, even more preferably between 0.09 and 0.11 wt.%, even more preferably around 0.1 wt.%.

Another relevant factor in the foaming composition of the invention is the level of lactose. Too high lactose levels may cause solubility problems due to limited solubility of lactose. The lactose level should preferably be lower than found in whey. Preferably, the whey protein to lactose weight ratio is at least 0.2, more preferably at least 0.24, most preferably at least 0.27, up to e.g. 0.5, preferably up to 0.4, most preferably up to 0.36. In absolute terms, the lactose level of the foaming composition, on a dry weight basis, is less than 12%, preferably between 5 and 11%.

In addition to or instead of lactose, the foaming composition contains other carbohydrates. Preferably the other carbohydrates at least partly have a sweetening effect, but may also serve as a bulking agent or as a carrier component to facilitate spray drying. Thus, the carbohydrates preferably comprise one or more of fructose, glucose, sucrose and short-chain fructans. Alternatively, the carbohydrates are digestible or non-digestible non-sweet carbohydrates, which are used in combination with an artificial (non-carbohydrate) sweetener. Further carbohydrates can be maltose, maltodextrins, or mixtures thereof with glucose, inulin, oligofructose or further carbohydrates having a stabilising effect. Especially preferred is a carbohydrate composition comprising glucose syrup having a DE (dextrose equivalent) of at least 19 up to e.g. 47, especially of from 26 to 47, more preferably from 26 to 38. The lactose to total carbohydrate weight ratio is preferably below 0.25, in particular between 0.10 and 0.20, more preferably 0.12 to 0.18. The level of glucose and glucose oligomers (= glucose syrup) is preferably between 20 and 60 wt.%, more preferably 35- 55 wt.% of the foaming composition. The total carbohydrate content, i.e. including any lactose, is preferably between 25 and 70 wt.% (dry) of the foaming composition, more preferably 30-65, most preferably 40-60 wt.%.

The foaming composition according to the invention further contains fats, preferably vegetable fats. Preferred examples of fat types comprise soy, palm or coconut oil. Especially preferred are so-called lauric fats, i.e. fats having a relatively high level of C12 and C14 fatty acids, mostly more than 40 wt. %. Suitable examples are palm kernel oil, hydrogenated palm kernel oil, palm oil, palm stearin, hydrogenated or non-hydrogenated coconut oil, MCT oil, sunflower oil, high oleic sunflower oil, shea oil, or combinations thereof,. The fat level, on a dry weight basis of the foaming composition, is preferably between 10 % - 40%, more preferably between 20% - 30%, most preferably between 22 and 28. In a preferred embodiment, the proportion of palm oil fats is at least 50% of the fat component, more preferably, the proportion of palm kernel oil is more than 60%. The level of trans fatty acids should be low, preferably lower than 1% of the fat component.

The foaming composition can further contain minor (<10%) components, such as salts or other minerals, in particular buffering salts, e.g. dipotassium phosphate, sodium hexametaphosphate or disodium phosphate, or free flowing agents, like tricalcium phosphate, tricalcium citrate or silicon dioxide. Preferably the amount of dipotassium phosphate and/or disodium phosphate in the foaming composition is between 0.1 % and 5.0 %, more preferably between 0.3 % and 4.0 %, more preferably between 1.0 % and 2.0 %, all on w/w basis..

The foaming composition preferably has a loose bulk density of between 50 and 400 g/L, preferably between 100 and 200 g/L, more preferably between 120 and 160 g/L. A density within this range can be obtained by the skilled person using known technology. For instance use can be made of gas injection. The gas may be any suitable food grade gas, such as nitrogen, nitrous oxide, air carbon dioxide or a mixture of two or more of such gases. Gases that are substantially inert are preferred. The gas may be introduced into the powder by any suitable process, for instance by gasifying an emulsion comprising the constituents as described above and then spray-drying. This allows for preparation of products with such a low density.

The foaming composition has a pH value of 6.8 or higher, preferably 7.0 or higher, more preferably 7.2 or higher, up to pH 7.5, preferably up to 7.4, more preferably up to 7.3.measured as 10 wt % solution in demi water.

In a further embodiment of the invention the composition may be added to an instant beverage powder, such as an instant coffee powder.

In another embodiment, the foaming composition of the invention can be combined with a conventional beverage creamer to enhance the beverage whitening effect.

The invention further relates to a process of preparing a powdered, dry foaming composition, comprising mixing fats, carbohydrates and proteins in an aqueous medium in such a manner that, on a dry weight basis, a protein content of less than 6 wt. %, preferably less than 5%, more preferably between 1 and 5%, more preferably between 3 and 5%, even more preferably between 3.5 and 4.5%. is obtained; homogenising, introducing a gas in the mixture and drying it. In such a method, the whey protein is preferably derived for the larger part from whey powder, wherein the whey powder may be added in amount of 3 - 30 wt %, more preferably 10 - 26 wt. %. On a weight basis,preferably more than 60% of the whey protein content of the foaming composition is derived from whey powder, more preferably more than 70%, even more preferably more than75% and most preferably more than 80%. Alternatively, on weight basis, less than 30%, preferably less than 25% and even more preferable less than 20% of the whey protein is derived from skimmed milk powder. The casein protein may be derived from milk powder, such as skimmed milk powder, but may also be derived from caseinate, or from mixtures of milk powder and caseinate. The range of milk powder and caseinate in such a mixture is for milk powder 1 - 9 % wt. and for caseinate 0.3 - 3.5 wt. %. The total amount of solids in the emulsion that is formed is 50 - 60 wt.%. The preferred range for the fat component in the emulsion is 12 - 18 wt.%, while the range of carbohydrates in the emulsion is 24 - 36 wt.%.The ranges of the other ingredients are as discussed above, where the amounts that have been mentioned are given in relation to the end-product.
The foaming composition can be prepared following methods known to the skilled person. In general the components as detailed above can be in solid or liquid form and are mixed in any order, homogenised and heated, followed by introducing a gas such as nitrogen or carbon dioxide into the liquid composition and then spray-drying.

The composition may be packaged in a unit dose packaging, such as a sachet, typically providing about 2 - 18 g per dosage, in particular 6 - 14 g per dosage, in a multi-use package for domestic use, e.g. a container of 50 - 500 g or in a multi-use container for use in a coffee, cacao, cocoa or other beverage vending machine.

The invention further comprises a method for preparing an instant beverage composition comprising mixing the foaming composition as described above with a vegetable or animal extract and one or more of a thickener and/or stabilizer, a sweetener, a flavoring compound and a coloring compound. The vegetable or animal extract may be any of coffee or tea extracts, matcha tea, chocolate powders, bouillon, meat extract or instant soup powders. Thickeners or stabilisers may be chosen from carboxymethyl cellulose, hydropropyl methyl cellulose, carrageenan, xanthan gum in amounts of 0.1 - 0.8 wt. % to impart viscosity and/or mouthfeel. Flavor compounds may be vanilla, cinnamon, cardamom, chai flavor, salt, and the like. As coloring compound next to conventional colorants, cocoa or cacao may be used.
The invention further pertains to a process for preparing a foamed beverage comprising adding a foaming composition as described above to a beverage preparation and mixing. The beverage preparation may be any hot or cold beverage, preferably coffee, and the mixing may take place by stirring and/or shaking. The addition of the foaming composition to the beverage preparation may be done manually or automatically, such as in vending machines.

### EXAMPLES

### 1. Preparation of compositions

Three foaming compositions were made in a similar manner as generally described above (and specified in more detail in WO 2010/005297) and two foaming compositions according to the invention were made in the same manner. The amounts of the specific ingredients for each of the composition are listed in the table directly below. (all values in weight/weight).

Skimmed milk powder, glucose syrup powder, whey powder and water were mixed. After mixing, coconut oil was added and the mixture was heated. Thereafter dipotassium phosphate was added and the final mixture was heated and homogenized. Nitrogen gas was injected into the emulsion and the mixture was spray dried to obtain a powder having the specified bulk density.

Loose bulk density was determined by pouring the powder in a graded 500 ml glass cylinder.

| Ingredient | Comparative composition | Composition without emulsifier | Comparative composition A | Composition B | Composition C |
|---|---|---|---|---|---|
| Fat (Coconut oil) | 25% | 23% | 23% | 25% | 25% |
| Skimmed milk powder (SMP) | 23.5% | 18% | 18% | 5% | 5% |
| Whey powder (WP) | - | | | 13% | 13% |
| Glucose syrup powder | 50% | 55.5% | 54.7% | 53% | 53% |
| Dipotassium phosphate | 2% | 1.2% | 1.9% | 1.5% | 1.5% |
| Emulsifier | 0.5% SSL | - | 0.4% SSL | 0.1% DATEM | 0.25% SSL |
| | | | | | |
| Total protein | 8.2% | 7% | 7.3% | 3.2% (1.75 from SMP and 1.49 from WP) | 3.2% (1.75 from SMP and 1.49 from WP) |
| Bulk density | 140 g/L | 180 g/L | 178 g/L | 150 g/L | 150 g/L |

### 2. Foam testing

Each powder (10 g) and fine instant coffee (2.5g) were weighed in a 250 ml beaker (with a diameter of 5.8 cm). The beaker was cover with a tissue and its content mixed thoroughly. 150 ml of hot water (about 85°C) was added and stirred with a spoon until the powder was dissolved.

Directly after effervescence the foam height was measured with a ruler to the millimeter precise. The foam height was assessed after 5 minutes and after 15 minutes and the coffee mixture was assessed and tasted by a test panel for colour and taste.

| Results | Comparative composition | Composition without emulsifier | Comparative composition A | Composition B | Composition C |
|---|---|---|---|---|---|
| Height after 1 minute (in mm) | 14 | 16 | 13 | 19 | 19 |
| Height after 5 minutes (in mm) | 12 | 13 | 10 | 14 | 15 |
| Height after 15 minutes (in mm) | 10 | NT* | NT | 12 | 12 |
| Foam colour | light | dark | light | medium | medium |
| Foam taste | More milky, less coffee | NT | NT | Milky and cowy | Milky and cowy |
| Stability (in %) | 85.7 % | 81.2% | 76.9% | 73.7 % (0.1% DATEM) | 79.0 (0.25% SSL) |
| | | | | | |
| Remarks | no flocculation | heavy flocculation | no flocculation | no flocculation | no flocculation |

| | | | | | |
|---|---|---|---|---|---|
| *NT = not tested. | | | | | |

Foam stability is defined as foam height after 5 minutes/ foam height after 1 minute.

## Claims

1. A powdered foaming composition for beverages comprising fat, carbohydrates, protein, and an emulsifier, wherein the protein content is 6% or lower, based on the dry weight of the composition, wherein the protein fraction comprises whey protein and casein and wherein the whey protein to casein weight ratio is in the range of 50:1 to 1.1:1, the amount of casein is in the range 0.1-2.5 wt%, the amount of whey protein is in the range 2-4.9 wt%, and wherein the emulsifier is selected from the group of sodium stearoyl lactylate (SSL), diacetyl tartaric ester of mono- and diglycerides (DATEM) and sucrose esters of fatty acids.

2. A foaming composition according to any of the preceding claims, wherein the total amount of emulsifier will not exceed 1 wt.%.

3. A foaming composition according to any of the preceding claims comprising 10 to 40 % fat on dry weight basis, wherein the fat is selected from palm kernel oil, hydrogenated palm kernel oil, palm oil, palm stearin, hydrogenated or non-hydrogenated coconut oil, MCT oil, sunflower oil, high oleic sunflower oil, shea oil, and combinations thereof.

4. A foaming composition according to any of the preceding claims, wherein the carbohydrates are chosen from lactose, fructose, glucose, sucrose, short-chain fructans, maltose, maltodextrins, glucose syrup, inulin, oligofructose, and combinations thereof.

5. A foaming composition according to claim 4, wherein the glycose syrup has a DE (dextrose equivalent) of at least 19.

6. A foaming composition according to any of the previous claims, wherein the content of carbohydrates is between 25 and 70% on a dry weight basis.

7. A foaming composition according to claim 6, wherein the composition has a loose bulk density of between 50 and 400 g/L.

8. An instant beverage composition comprising a foaming composition according to any of claims 1 -7.

9. An instant beverage composition according to claim 8, further comprising one or more of
a thickener and/or a stabilizer;
a sweetener;
a flavoring compound;
a coloring compound; and
a vegetable or animal extract.

10. A process for producing a foaming composition according to any of claims 1 - 7, wherein said process comprises the steps of:
- mixing fat(s), carbohydrate(s), a source of casein, and whey powder in an aqueous medium,
- homogenising the mixture obtained,
- introducing a gas into the homogenized mixture; and
- drying the mixture obtained.

11. A process according to claim 10, wherein the source of casein is milk powder, such as skimmed milk powder, caseinate or a mixture of those.

12. A process according to claim 10, wherein the whey powder is added in a range from 3 - 30 wt.% on a dry weight basis.

13. A process for preparing an instant beverage composition, comprising mixing the foaming composition according to any of claims 1 - 7 with a vegetable or animal extract and one or more of
a thickener and/or a stabilizer;
a sweetener;
a flavoring compound; and
a coloring compound.

## Patentansprüche

1. Pulverförmige schäumende Zusammensetzung für Getränke, umfassend Fett, Kohlenhydrate, Protein und einen Emulgator, wobei der Proteingehalt 6 % oder weniger, bezogen auf das Trockengewicht der Zusammensetzung, beträgt, wobei die Proteinfraktion Molkeprotein und Kasein umfasst und wobei das Gewichtsverhältnis von Molkeprotein zu Kasein in dem Bereich von 50:1 bis 1,1:1 liegt, die Menge an Kasein in dem Bereich von 0,1-2,5 Gew.-% liegt, die Menge an Molkeprotein in dem Bereich von 2-4,9 Gew.-% liegt und wobei der Emulgator ausgewählt ist aus der Gruppe von Natriumstearoyllactylat (SSL), Diacetylweinsäureester von Mono- und Diglyceriden (DATEM) und Saccharoseestern von Fettsäuren.

2. Schäumende Zusammensetzung gemäß einem der vorstehenden Ansprüche, wobei die Gesamtmenge an Emulgator 1 Gew.-% nicht übersteigen wird.

3. Schäumende Zusammensetzung gemäß einem der vorstehenden Ansprüche umfassend 10 bis 40 % Fett auf Trockengewichtsbasis, wobei das Fett ausgewählt ist aus Palmkernöl, hydriertem Palmkernöl, Palmöl, Palmstearin, hydriertem oder nichthydriertem Kokosnussöl, MCT-Öl, Sonnenblumenöl, ölsäurereichem Sonnenblumenöl, Shea-Öl und Kombinationen davon.

4. Schäumende Zusammensetzung gemäß einem der vorstehenden Ansprüche, wobei die Kohlenhydrate ausgewählt sind aus Lactose, Fructose, Glucose, Saccharose, kurzkettigen Fructanen, Maltose, Maltodextrinen, Glucosesirup, Inulin, Oligofructose und Kombinationen davon.

5. Schäumende Zusammensetzung gemäß Anspruch 4, wobei der Glucosesirup ein DE (Dextroseäquivalent) von wenigstens 19 aufweist.

6. Schäumende Zusammensetzung gemäß einem der vorstehenden Ansprüche, wobei der Gehalt an Kohlenhydraten zwischen 25 und 70 % auf Trockengewichtsbasis beträgt.

7. Schäumende Zusammensetzung gemäß Anspruch 6, wobei die Zusammensetzung eine lose Schüttdichte von zwischen 50 und 400 g/l aufweist.

8. Instantgetränkezusammensetzung umfassend eine schäumende Zusammensetzung gemäß einem der Ansprüche 1-7.

9. Instantgetränkezusammensetzung gemäß Anspruch 8, ferner umfassend eines oder mehrere von
einem Verdickungsmittel und/oder einem Stabilisator;
einem Süßungsmittel;
einer Aromaverbindung;
einer färbenden Verbindung; und
einem Pflanzen- oder Tierextrakt.

10. Verfahren zur Herstellung einer schäumenden Zusammensetzung gemäß einem der Ansprüche 1-7, wobei das Verfahren die Schritte umfasst:
- Mischen von Fett(en), Kohlenhydrat(en), einer Kaseinquelle und Molkepulver in einem wässrigen Medium;
- Homogenisieren des erhaltenen Gemischs;
- Einführen eines Gases in das homogenisierte Gemisch; und
- Trocknen des erhaltenen Gemischs.

11. Verfahren gemäß Anspruch 10, wobei die Kaseinquelle Milchpulver, wie z.B. Magermilchpulver, Kaseinat oder ein Gemisch davon ist.

12. Verfahren gemäß Anspruch 10, wobei das Molkepulver in einem Bereich von 3-30 Gew.-% auf Trockengewichtsbasis zugegeben wird.

13. Verfahren zur Herstellung einer Instantgetränkezusammensetzung, umfassend Mischen der schäumenden Zusammensetzung gemäß einem der Ansprüche 1-7 mit einem Pflanzen- oder Tierextrakt und einem oder mehreren von
einem Verdickungsmittel und/oder einem Stabilisator;
einem Süßungsmittel;
einer Aromaverbindung; und
einer färbenden Verbindung.

## Revendications

1. Composition moussante en poudre pour des boissons comprenant une graisse, des glucides, une protéine et un émulsifiant, la teneur en protéine étant de 6 % ou moins, sur la base du poids sec de la composition, la fraction protéique comprenant une protéine de lactosérum et de la caséine et, le rapport en poids de protéine de lactosérum sur caséine étant dans la plage de 50 : 1 à 1,1 : 1, la quantité de caséine étant dans la plage de 0,1 à 2,5 % en poids, la quantité de protéine de lactosérum étant dans la plage de 2 à 4,9 % en poids, et l'émulsifiant étant choisi dans le groupe du stéaroyllactylate de sodium (SSL), un ester diacétyltartrique de monoglycérides et diglycérides (DATEM) et des esters de saccharose d'acides gras.

2. Composition moussante selon l'une quelconque des revendications précédentes, dans laquelle la quantité totale d'émulsifiant ne dépassera pas 1 % en poids.

3. Composition moussante selon l'une quelconque des revendications précédentes comprenant 10 à 40 % de graisse sur une base de poids sec, la graisse étant choisie parmi l'huile de palmiste, l'huile de palmiste hydrogénée, l'huile de palme, la stéarine de palme, l'huile de noix de coco hydrogénée ou non hydrogénée, l'huile MCT, l'huile de tournesol, l'huile de tournesol à haute teneur oléique, l'huile de karité et des combinaisons correspondantes.

4. Composition moussante selon l'une quelconque des revendications précédentes, les glucides étant choisis parmi le lactose, le fructose, le glucose, le saccharose, des fructanes à chaîne courte, le maltose, des maltodextrines, un sirop de glucose, l'inuline, l'oligofructose et des combinaisons correspondantes.

5. Composition moussante selon la revendication 4, le sirop de glucose ayant un DE (équivalent de dextrose) d'au moins 19.

6. Composition moussante selon l'une quelconque des revendications précédentes, la teneur en glucides étant comprise entre 25 et 70 % sur une base de poids sec.

7. Composition moussante selon la revendication 6, la composition ayant une densité apparente non tassée comprise entre 50 et 400 g/L.

8. Composition de boisson instantanée comprenant une composition moussante selon l'une quelconque des revendications 1 à 7.

9. Composition de boisson instantanée selon la revendication 8, comprenant en outre l'un ou plusieurs parmi
un épaississant et/ou un stabilisant ;
un édulcorant ;
un composé aromatisant ;
un composé colorant ; et
un extrait végétal ou animal.

10. Procédé pour la production d'une composition moussante selon l'une quelconque des revendications 1 à 7, ledit procédé comprenant les étapes de :
- mélange d'une ou plusieurs graisses, d'un ou plusieurs glucides, d'une source de caséine et de poudre de lactosérum dans un milieu aqueux,
- homogénéisation du mélange obtenu,
- introduction d'un gaz dans le mélange homogénéisé ; et
- séchage du mélange obtenu.

11. Procédé selon la revendication 10, la source de caséine étant une poudre de lait, telle qu'une poudre de lait écrémé, un caséinate ou un mélange de ceux-ci.

12. Procédé selon la revendication 10, la poudre de lactosérum étant ajoutée en une plage de 3 à 30 % en poids sur une base de poids sec.

13. Procédé pour la préparation d'une composition de boisson instantanée, comprenant
le mélange de la composition moussante selon l'une quelconque des revendications 1 à 7 avec un extrait végétal ou animal et l'un ou plusieurs parmi un épaississant et/ou un stabilisant ;
un édulcorant ;
un composé aromatisant ; et
un composé colorant.
